# EUROPEAN PATENT SPECIFICATION

(11) **EP 1 023 428 B1**
(45) Date of publication and mention of the grant of the patent: **13.08.2003**
(21) Application number: 98944103.5
(22) Date of filing: 24.09.1998
(51) Int. Cl.: C11D 1/835, C11D 17/00, C11D 3/48, C11D 3/20

(54) **ACIDIC, THICKENED CLEANING AND DISINFECTING COMPOSITIONS**
SAURE, VERDICKTE REINIGUNGS- BZW. DESINFEKTIONSZUSAMMENSETZUNG
COMPOSITIONS ACIDES EPAISSIES POUR LE NETTOYAGE ET LA DESINFECTION

(30) Priority: 30.09.1997 GB 9720690
(43) Date of publication of application: 02.08.2000
(73) Proprietor: Reckitt Benckiser Inc., Wayne, New Jersey 07474 (US)
(72) Inventor: PAPASSO, Thomas, Michael, Bridgewater, NJ 08807 (US); LOVE, Michael, David, Parsippany, NJ 07054 (US); CAVANAGH, James, William, Ramsey, NJ 07446 (US); FELLOWS, Robert, Terence, Park Ridge, NJ 07656 (US)
(74) Representative: Dickson, Elizabeth Anne
(86) International application number: PCT/GB98/02887
(87) International publication number: WO 99/016854

(56) References cited:
- EP-A- 0 265 202
- EP-A- 0 606 712
- EP-A- 0 621 335
- EP-A- 0 651 048
- EP-A- 0 651 049
- WO-A-94/13769
- GB-A- 2 194 957

## Description

The present invention relates to thickened cleaning and disinfecting compositions which are acidic in nature and which exhibit good cleaning, disinfecting and long-term stability.

While the prior art has provided various compositions directed to cleaning and disinfecting hard surface, particularly lavatory surfaces, there is a continuing need in the art for thickened aqueous compositions which provide satisfactory cleaning, especially of limescale deposits from metal, enamel and porcelain surfaces (such as found on lavatory fixtures), disaffection of hard surfaces and good long-term stability of the thickened compositions.

EP-A-265,202 describes a sanitising composition comprising:
i) one or more quaternary ammonium antimicrobial agent and/or one or more substituted guanidine antimicrobial agents;
ii) one or more organic acids; and
iii) one or more inorganic acids.

According to a first aspect of the invention there is provided a thickened aqueous composition for use as an acidic hard surface cleaning and disinfecting composition, comprising:
i) one or more non-ionic surfactants;
ii) one or more quaternary ammonium surfactants having germicidal properties;
iii) an acid mixture comprising formic acid and one or more other water-soluble organic acids, preferably where the formic acid and one or more other water-soluble organic acids are present in a weight ratio of formic acid : water-soluble organic acid of from 1:0.1 to 1:10;;
iv) a cellulose or starch based thickener;
v) optionally, but desirably, one or more conventional additives; and
vi) water.

In accordance with the present invention there is also provided a thickened aqueous composition for use as an acidic hard surface cleaning and disinfecting composition, comprising:
i) one or more non-ionic surfactants, preferably linear primary alcohol ethoxylates;
ii) one or more quaternary ammonium surfactants having germicidal properties, optionally together with a solvent, such as an alcohol;
iii)an acid mixture comprising formic acid and one or more other water-soluble organic acids (preferably water-soluble organic acids selected from lactic acid, glycolic acid and citric acid), preferably where the formic acid and one or more other water-soluble organic acids are present in a weight ratio of formic acid : water-soluble organic acid of from 1:0.1 to 1:10;
iv) a cellulose or starch based thickener;
v) optionally, but desirably, one or more conventional additives (such as pH adjusting agents, fragrances or colouring agents); and
vi) water.

According to a preferred aspect of the present invention there is provided a thickened aqueous composition for use as an acidic hard surface cleaning and disinfecting composition, comprising:
i) up to 10% wt. of one or more non-ionic surfactants, preferably linear primary alcohol ethoxylates;
ii) up to 10% wt. of one or more quaternary ammonium surfactants having germicidal properties; optionally together with up to 1% wt. of a solvent;
iii) up to 10% wt. of an acid mixture comprising formic acid and one or more other water-soluble organic acids (preferably water-soluble organic acids selected from lactic acid, glycolic acid and citric acid), preferably where the formic acid and one or more water-soluble organic acids are present in a weight ratio of formic acid: water-soluble organic acid of from 1:0.1 to 1:10;
iv) up to 10% wt. of a cellulose, modified cellulose, starch or modified starch;
v) optionally up to 10% wt. of one or more conventional additives, such as pH adjusting agents, fragrances and colouring agents;
vi) with the balance to 100% wt. water.

The compositions of the invention are preferably effefctive against both gram positive and gram negative bacteria.

The compositions can be used in a method for cleaning (especially for the removal of limescale deposits) and disinfecting metal, enamel and porcelain surfaces such as are found on lavatory fixtures. In particular there is provided a process for cleaning limescale from a hard surface comprising the process step of contacting the hard surface having limescale thereon with a cleaning effective amount of the composition according to any of the preceding claims.

Any of the well-known non-ionic surfactants may be used in the compositions of the invention. Exemplary useful non-ionic surfactants include condensation products of alkylene oxide groups with an organic hydrophobic compound, such as an aliphatic or alkyl aromatic compound.

Further exemplary useful nonionic surfactants include the polyoxyethylene ethers of alkyl aromatic hydroxy compounds, e.g. alkylated polyoxyethylene phenols, polyoxyethylene ethers of long chain aliphatic alcohols, the polyoxyethylene ethers of hydrophobic propylene oxide polymers, and the higher alkyl amine oxides. Also contemplated as useful are ethoxylated alkyl phenols such as octylphenolethoxylates and nonylphenolethoxylates.

Preferred non-ionic surfactants are ethoxylated alcohols. The compounds are well known and may be formed by condensation of an alcohol, or mixtures thereof, with sufficient ethylene oxide to produce a compound having a polyoxyethylene. Preferably, the number of ethylene oxide units present is an amount sufficient to ensure solubility of the compound in an aqueous composition of this invention or in any dilution thereof. Desirably, the ethoxylated alcohols are produced by condensation of 4 to 20, more preferably 6 to 18, moles of ethylene oxide with 1 mole of the linear primary aliphatic alcohol. The aliphatic alcohol may be linear or may be branched, and may be a primary, secondary or tertiary C₆-C₂₂ alcohol (for example: decyl alcohol, dodecyl alcohol, tridecyl alcohol, hexadecyl alcohol or octadecyl alcohol). As known to those skilled in the art, the number of moles of ethylene oxide which are condensed with one mole of aliphatic alcohol depends upon the molecular weight of the hydrophobic portion of the condensation product. The aliphatic alcohols are desirably a primary, secondary or tertiary aliphatic alcohol having 10 to 20, and preferably 11 to 17, carbon atoms, and most preferably is an alcohol having 12 to 16 carbon atoms.

Most preferably, the non-ionic surfactant of the present inventive compositions is the condensation product of linear or branched C₁₂-C₁₆ aliphatic alcohols, especially C₁₂-C₁₆ linear aliphatic alcohols or mixtures thereof, with sufficient ethylene oxide to provide an average of from 6 to 12 moles of ethylene oxide per molecule. Most preferably, the non-ionic surfactant consists solely of linear or branched C₁₂-C₁₆ aliphatic alcohols with 6 to 9 moles of ethylene oxide per molecule.

The non-ionic surfactant is present in any effective amount, but generally is present in an amount of up to 10% by weight, based on the total weight of the composition. Preferably, the non-ionic surfactant is present in an amount of from 0.01% wt. to 8% wt., and more preferably is present in an amount of from 0.1% wt. to 5% wt.

Preferred quaternary ammonium surfactants of the compositions according to the invention are those the formula: 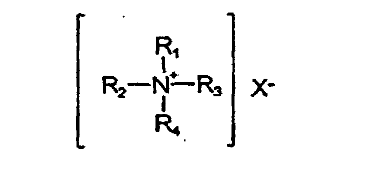 where at least one of R₁, R₂, R₃ and R₄ is a hydrophobic, aliphatic, aryl aliphatic or aliphatic aryl radical of from 6 to 26 carbon atoms, and the entire cation portion of the molecule has a molecular weight of at least 165. The hydrophobic radicals may be, for example, long-chain alkyl, long-chain alkoxy aryl, long-chain alkyl aryl, halogen-substituted long-chain alkyl aryl, long-chain alkyl phenoxy alkyl or aryl alkyl. The remaining radicals on the nitrogen atoms other than the hydrophobic radicals are substituents of a hydrocarbon structure usually containing a total of no more than 12 carbon atoms. The radicals R₁, R₂, R₃ and R₄ may be straight chained or may be branched, but are preferably straight chained, and may include one or more amide or ester linkages. The radical X may be any salt-forming anionic radical, and preferably aids in the solubilization of the quaternary ammonium germicide in water.

Exemplary quaternary ammonium surfactants include the alkyl ammonium halides such as cetyl trimethyl ammonium bromide, alkyl aryl ammonium halide such as octadecyl dimethyl benzyl ammonium bromide and N-alkyl pyridinium halides such as N-cetyl pyridinium bromide. Other suitable types of quaternary ammonium surfactants include those in which the molecule contains either amide or ester linkages such as octyl phenoxy ethoxy ethyl dimethyl benzyl ammonium chloride and N-(laurylcocoaminoformylmethyl-pyridinium chloride. Other very effective types of quaternary ammonium compounds which are useful as germicides include those in which the hydrophobic radical is characterized by a substituted aromatic nucleus as in the case of, for example lauryloxyphenyltrimethyl ammonium chloride, cetylaminophenyltrimethyl ammonium methosulfate, dodecylphenyltrimethyl ammonium methosulfate, dodecylbenzyltrimethyl ammonium chloride and chlorinated dodecylbenzyltrimethyl ammonium chloride.

More preferred quaternary ammonium compounds used in the compositions of the invention include those of the structural formula: 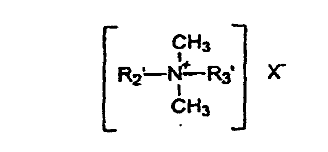 wherein R₂¹ and R₃¹ may be the same or different and are selected from C₈-C₁₂ alkyl, or R₂¹ is C₁₂-C₁₆ alkyl, C₈-C₁₈ alkylethoxy, C₈-C₁₈ alkylphenolethoxy and R₃¹ is benzyl, and X is a halide, for example a chloride, bromide or iodide, or X is a methosulfate counterion. The alkyl groups recited in R₂¹ and R₃¹ may be linear or branched, but are preferably substantially linear.

Particularly useful quaternary germicides include compositions presently commercially available under the tradenames BARDAC, BARQUAT, BTC, LONZABAC, HYAMINE, (ex. Lonza, Inc., Fairlawn, NJ and/or from Stepan Co., Northfield IL, as well as other sources).

These quaternary ammonium surfactants are usually provided in a solvent, such as a C₁ to C₆ alcohol (e.g. ethanol, n-propanol, isopropanol, n-butanol, sec-butanol) or in an aqueous/alcohol mixture containing such alcohols. While these alcohols are present in only a very minor amount as they are supplied as part of the quaternary ammonium compounds, it is believed they contribute to the antimicrobial efficacy of the invention. Therefore, it is preferred that up to 1% wt. of a C₁ to C₆ alcohol, preferably 0.001 - 1% wt., more preferably 0.01 - 0.75% wt. be present in the inventive compositions.

In the cleaning compositions according to the invention, the quaternary ammonium surfactant is required to be present in amounts which are effective in exhibiting satisfactory germicidal activity against selected bacteria sought to be treated by the cleaning compositions. Such efficacy may be achieved against less resistant bacterial strains with only minor amounts of the quaternary ammonium compounds being present, while more resistant strains of bacteria require greater amounts of the quaternary ammonium compounds in order to destroy these more resistant strains.

The quaternary ammonium surfactant need only be present in germicidally effective amounts, which may be as little as 0.001% wt. Typically, these compounds are present in amounts of from 0.01 to 10% by weight, based on the total weight of the composition. Generally, effective "hospital strength" germicidal efficacy meeting current EPA guidelines is provided when the quaternary ammonium compounds are present in an amount of from 0.05% wt. to 5% wt. Desirably in the compositions of the present invention, the quaternary ammonium compounds is present in an amount of from 0.05% wt. to 3% wt., based on the total weight of the inventive compositions.

An essential feature of the inventive compositions is an acid mixture comprising formic acid and one or more other water-soluble organic acids. The acid mixture may be present in any effective amount, but desirably is not present in amounts of more than 10% wt. based on the total weight of the compositions. Preferably the acid mixture is present from 0.01 to 10% wt., more preferably from 0.1 to 10% wt. of the compositions. The water-soluble organic acids include at least two carbon atoms and include at least one carboxyl group (-COOH) in their structure.

Particularly useful as water-soluble organic acids are formic acid and an acid selected from the group consisting of lactic acid, citric acid and glycolic acid. The formic acid and the further water-soluble organic acid in the acid mixture are preferably present in a weight ratio of formic acid: water-soluble organic acid of from 1:0.1 to 1:10, desirably from 1:0.25 to 1:2.5, and more desirably from 1:0.5 to 1:1.75. Particularly advantageous ratios are indicated in the Examples.

The present inventors have surprisingly discovered a synergistic effect using the acid mixtures described. It has been surprisingly discovered that the long-term stability of cellulose-containing compositions is achieved when the formic acid is present with one or more water-soluble organic acids (or water-soluble salt forms thereof), particularly in the weight ratios described. In the past, cellulose-containing thickening compositions have not been typically used with formic acid, even though this acid is very desirable as it is particularly effective in removing limescale. The use of one or more water-soluble organic acids in conjunction with formic acid has surprisingly been found to reduce substantially the loss of viscosity of the thickened composition. This is surprising as the presence of the acids in such compositions is expected to quickly degrade other constituents which may be present, especially thickeners such as described below. This is particularly true in compositions which contain formic acid in conjunction with cellulose based materials, as formic acid is known to quickly degrade such cellulose based materials.

This surprising benefit is frequently very apparent when formic acid is present in conjunction with two (or more) different water-soluble organic acids. This has been shown to be particularly true where the ratio of the formic acid: (total weight of the two or more different water-soluble organic acids) is a ratio of 1: (0.1 - 10). Where three different water-soluble organic acids are present, desirably these are present in a weight ratio of formic acid:first water-soluble organic acid:second water-soluble organic acid of 1:(0.1-10):(0.1-10), preferably in a weight ratio of 1:(0.25-2.5): (0.25-2.5), and most preferably in a weight ratio of 1:(0.5-1.75): (0.5-1.75). Particularly advantageous ratios are indicated in the Examples.

The presence of formic acid in conjunction with at least one further water-soluble organic acid in the weight ratios described above provides good cleaning, and has been found to suffer a reduced loss of viscosity under the conditions of accelerated aging testing at elevated temperatures, particularly under the test protocol described in the examples. This is particularly important as the compositions are acidic in nature.

The inventive compositions are desirably low odor, are virtually transparent (in the absence of colouring agents) even after high temperature stability testing, and are easy to disperse onto surfaces to be cleaned and disinfected.

As noted, the compositions of the invention are thickened and have a viscosity greater than water. The actual degree of thickening is dependent on the amount of thickener included in a composition. Thickeners which may be used are cellulose based thickeners including, but not limited to, methyl cellulose, methylethyl cellulose, hydroxymethyl cellulose, hydroxyethyl cellulose and carboxymethyl cellulose. Generally the thickener is present in not more than 10% wt. based on the total weight of the composition of which it forms a part. Desirably the thickener is present in an amount of from 0.01 to 5% wt., and more desirably from 0.01 to 2% wt. Starch based thickeners, including so called modified starch based thickeners, as frequently encountered in the foods industry are also contemplated as being useful.

The composition of the invention may, optionally, further include minor amounts, suitably less than a combined total amount of 10% wt., and more preferably not more than 5% wt., of conventional additives. Examples of suitable conventional additives include but not are limited to: colourants such as dispersible pigments and dyes (including acid dyes); fragrances and perfumes (typically proprietary compositions); pH adjusting agents; non-aqueous solvents (including alcohols, glycols and glycol ethers); perfume carriers; optical brightners (including those based on stilbene based compounds) and hydrotropes (including urea and alkyl diphenyl ether disulphonates), as well as other conventional additives.

The compositions of the invention are acidic, and exhibit a pH of less than 7, more preferably 4.5 and less and most preferably from 3 to 4.5. Whereas the presence of the acid mixture described above will impart acidity to the composition, it is frequently desirable to include a pH adjusting agent to the compositions to maintain the compositions at approximately a desired pH (or pH range). Exemplary useful pH buffers include inorganic and organic buffering agents, and especially include alkali metal and alkaline earth metal hydroxides such as sodium hydroxide and potassium hydroxide. Particularly preferred is sodium hydroxide which is widely available at low cost, and is effective. Further suitable adjusting agents include phosphorus containing compounds, monovalent and polyvalent salts such as of silicates, carbonates, and borates, certain acids and bases, tartrates and certain acetates. Further exemplary pH adjusting agents include mineral acids, basic compositions, and organic acids, which are typically required in only minor amounts. Further non-limiting exemplary pH buffering compositions include the alkali metal phosphates, polyphophates, pyrophosphates, triphosphates, tetraphosphates, silicates, metasilicates, polysilicates, carbonates, hydroxides, and mixtures of the same. Certain salts, such as the alkaline earth phosphates, carbonates, hydroxides, can also function as buffers. It may also be suitable to use as buffers such materials as aluminosilicates (zeolites), borates, aluminates, and their alkali metal salts. Citrates and citric acid may also be advantageously used in the compositions. Others not described here may also be used.

Such materials as described above are each individually known to the art, and are commercially available. For any particular composition described above, any optional ingredients should be compatible with the other ingredients present.

As is noted above, the compositions according to the invention are aqueous in nature. Water is added to provide to 100% by weight of the compositions of the invention. The water is preferably deionized water.

According to a preferred aspect of the invention, there is provided thickened aqueous acidic compositions, for use as hard surface cleaning and disinfecting compositions comprising :
i) 0.1 - 10% wt., preferably 0.1 - 5% wt., of one or more non-ionic surfactants;
ii) 0.01 - 10% wt., preferably 0.1 - 3% wt., of one or more quaternary ammonium surfactants having germicidal properties, together with 0.001 - 1% wt., preferably 0.01 to 0.75% wt., of a C₁ to C₆ alcohol;
iii)0.01 - 10% wt., preferably 0.1 - 10% wt., of an acid mixture comprising formic acid and one or more water-soluble organic acids, particularly water-soluble organic acids selected from lactic acid, glycolic acid and citric acid, wherein these acids are present in a weight ratio of formic acid: water-soluble organic acids of from 1:0:1 to 1:10;
iv) 0.01 - 5% wt., preferably 0.01 - 2% wt; of a cellulose based thickener;
v) optionally up to 10% wt. of one or more conventional additives;
vi) with the remaining balance to 100% wt. being water.

The compositions may be made by simply mixing measured amounts of the individual constituents into water, at room temperature under constant stirring until a homogenous mixture is attained. In a preferred method, a first premixture is made by mixing together the non-ionic and fragrance constituents. A second premixture is made by mixing the water, cellulose thickener and, optionally, sodium hydroxide to form a homogenous mixture. Thereafter, the first premixture is added to the second premixture, after which the remaining constituents are added, and mixing continues until a homogenous mixture is attained.

The thickened aqueous acidic hard surface cleaning and disinfecting composition according to the invention is desirably provided as a ready to use product which may be directly applied to a hard surface. Hard surfaces that are usefully cleaned by the compositions of the invention include those associated with kitchen environments and other environments associated with food preparation. The inventive compositions are also particularly useful in cleaning and disinfecting lavatory fixtures such as shower stalls, bathtubs and bathing appliances (racks, curtains, shower doors, shower bars) toilets, bidets, wall and flooring surfaces as well as in the cleaning and disinfecting of lavatory fixtures, especially toilets and bidets. The compositions may be packaged in any suitable container particularly flasks or bottles, including squeeze-type bottles, as well as bottles provided with a spray apparatus which is used to dispense the composition by spraying.

According to a third aspect of the invention, there is provided the use of an acidic mixture in an aqueous cellulose thickened composition, the acidic mixture comprising formic acid and one or more water-soluble organic acids (preferably water-soluble organic acids selected from lactic acid, glycolic acid and citric acid), preferably where the formic acid and one or more water-soluble organic acids are present in a weight ratio of formic acid : water-soluble organic acid of from 1:0.1 to 1:10.

According to a further aspect of the invention, there is provided the use of an acidic mixture to improve the long term stability of a cellulose thickened cleaning composition, wherein the acid mixture comprises formic acid and one or more water-soluble organic acids (preferably water-soluble organic acids selected from lactic acid, glycolic acid and citric acid), preferably where the formic acid and one or more water-soluble organic acids are present in a weight ratio of formic acid : water-soluble organic acid of from 1:0.1 to 1:10.

The invention will now be exemplified by the following Examples.

### Examples:

A number of formulations according to the invention (indicated as Examples, "E") as well as several comparative examples (indicated as Comparatives, "C") were produced. Each of these were made were mixing the constituents outlined on Table 1 by adding the individual constituents into a beaker of deionized water at room temperature (68°F, 20°C) which was stirred with a conventional magnetic stirring rod. Stirring continued until the formulation was homogenous in appearance. It is to be noted that the constituents might be added in any order, but it is preferred that water be the initial constituent provided to a mixing vessel or apparatus as it is the major constituent and addition of the further constituents thereto is convenient. Also, it is convenient to disperse the cellulose thickener into a premixture with a quantity of water, and to add this premixture to the beaker. The exact compositions of the example formulations are listed on Table 1, below.

### Evaluation of Shelf Stability:

Formulations according to the invention and described on Table 1 were evaluated in order to determine their initial viscosity. The weights indicated on Table 1 indicate the amount of the named constituent, and are to be understood to represent 100%wt, actives of each named constituent.

The source of the named constituents are described in more detail in the following Table as used in Table 1 below.

**Table**

| **(Constituents)** | |
|---|---|
| linear alcohol ethoxylate | supplied by GENAPOL 26-L-60, a linear C12-C16 alcohol ethoxylate, with an average of 7.3 ethylene oxide groups per molecule (100%wt. actives) |
| quaternary ammonium chlorides | supplied by BTC-888 (Stepan Chem. Co.) a blend of dialkyl dimethyl benzyl ammonium chloride, and alkyl dimethyl benzyl ammonium chloride (80%wt. actives) which includes 10%wt. ethanol |
| hydroxyethyl cellulose | supplied by CELLOSIZE QP-100MH from Union Carbide Co. (Danbury, CT) (100%wt. actives) |
| formic acid | supplied in an aqueous, technical grade, Aldrich Co. or other supplier (94%wt. actives) |
| citric acid | supplied in an aqueous, technical grade, Aldrich Co. or other supplier (100%wt. actives) |
| glycolic acid | supplied in an aqueous, technical grade, Aldrich Co. or other supplier (57%wt. actives) |
| fragrance and dye | proprietary compositions of their respective manufacturers |
| dimineralised water | deionized water |

All viscosity measurements were performed on aliquots of a formulation at room temperature with a Brookfield Viscometer, fitted with a LV-2 spindle at a rotational speed of 60 rpm at 22°C. Viscosity measurement results are reported in centipoise at on Tables 2A, 3A below. Formulations were placed in sealed glass containers, and subjected to an accelerated aging test wherein the formulations were maintained at 120°F (48.5°C) for a period of 6 weeks. At weekly intervals, aliquots of each formulation were taken and used to determine the viscosity in the manner outlined above. Similarly, the results are reported on Tables 2A, 3A below. The cumulative total loss of viscosity, at weekly intervals is reported on Tables 2B and 3B below.

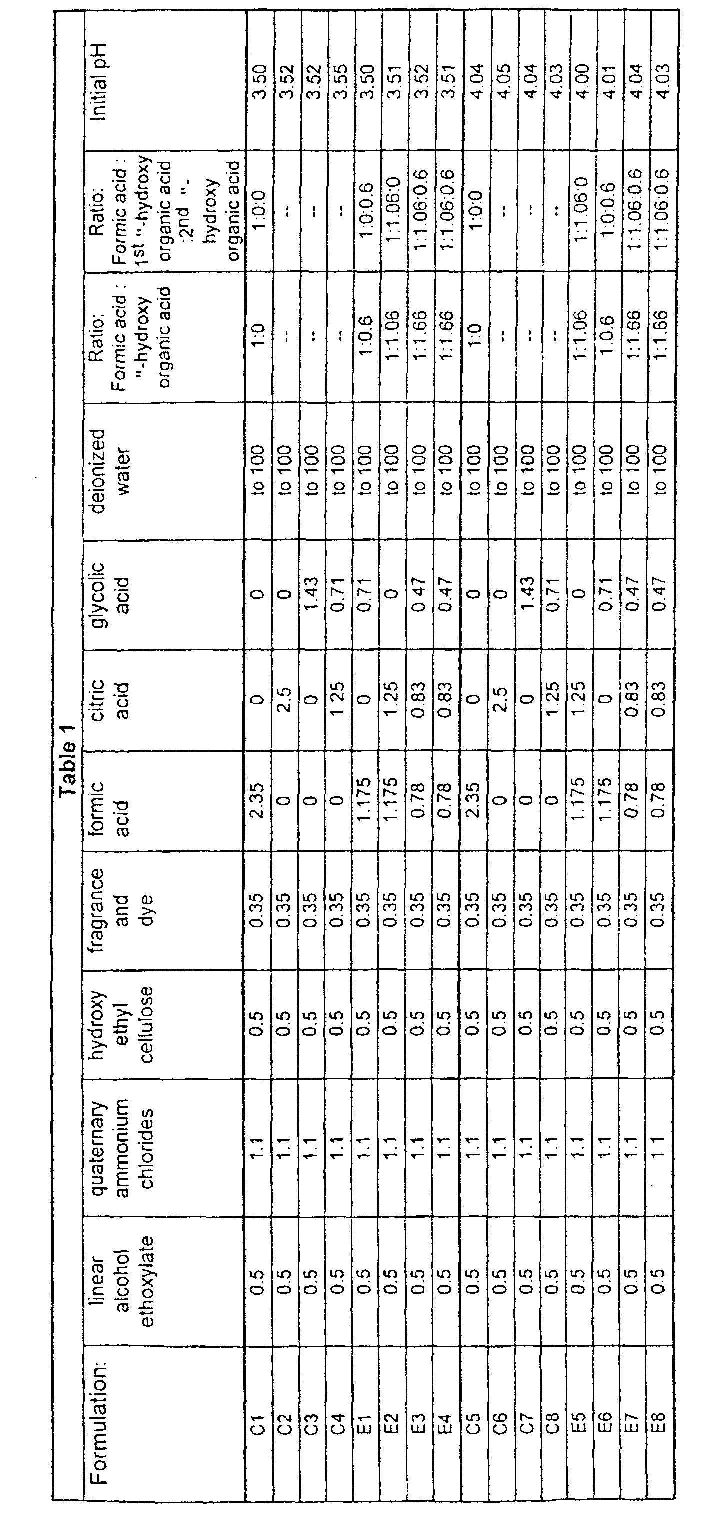

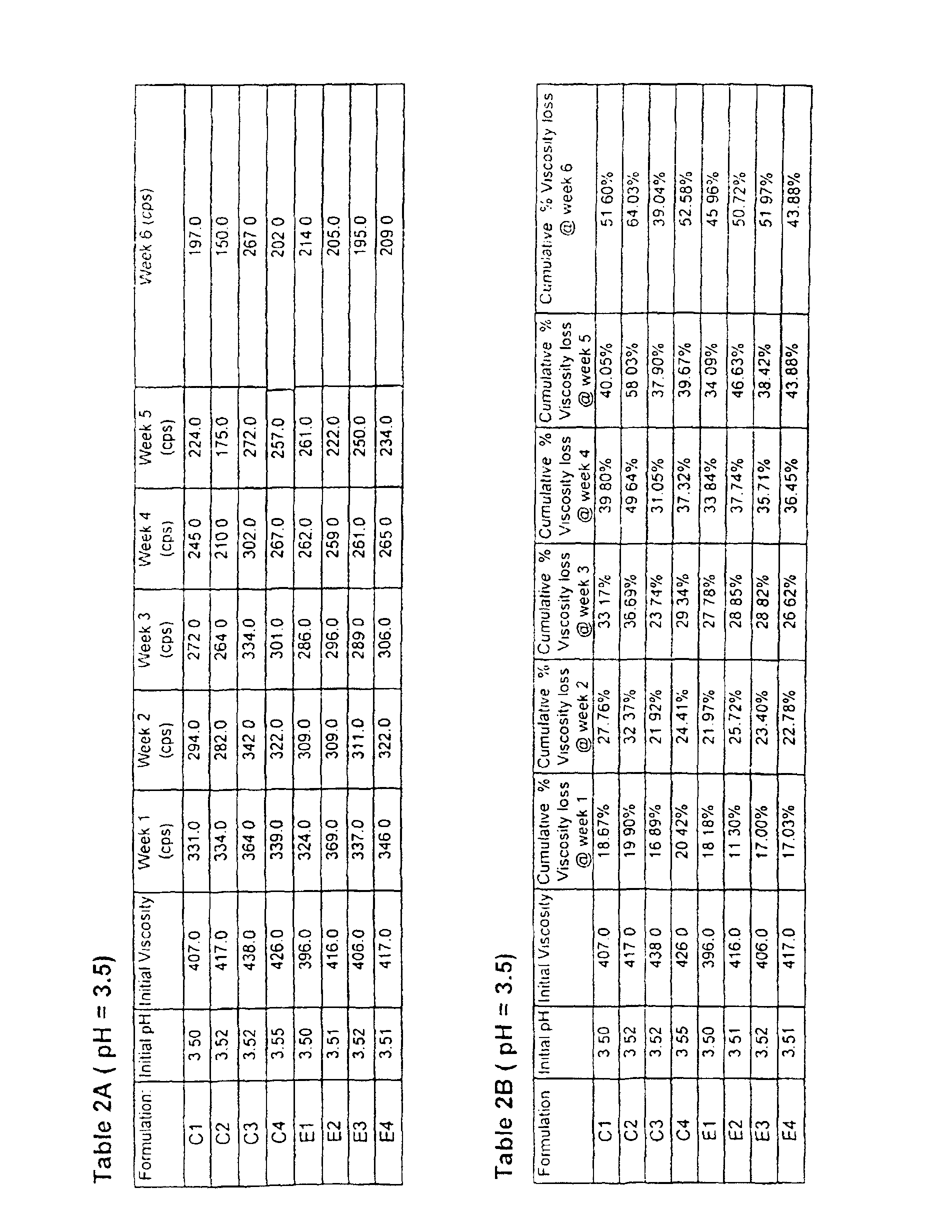

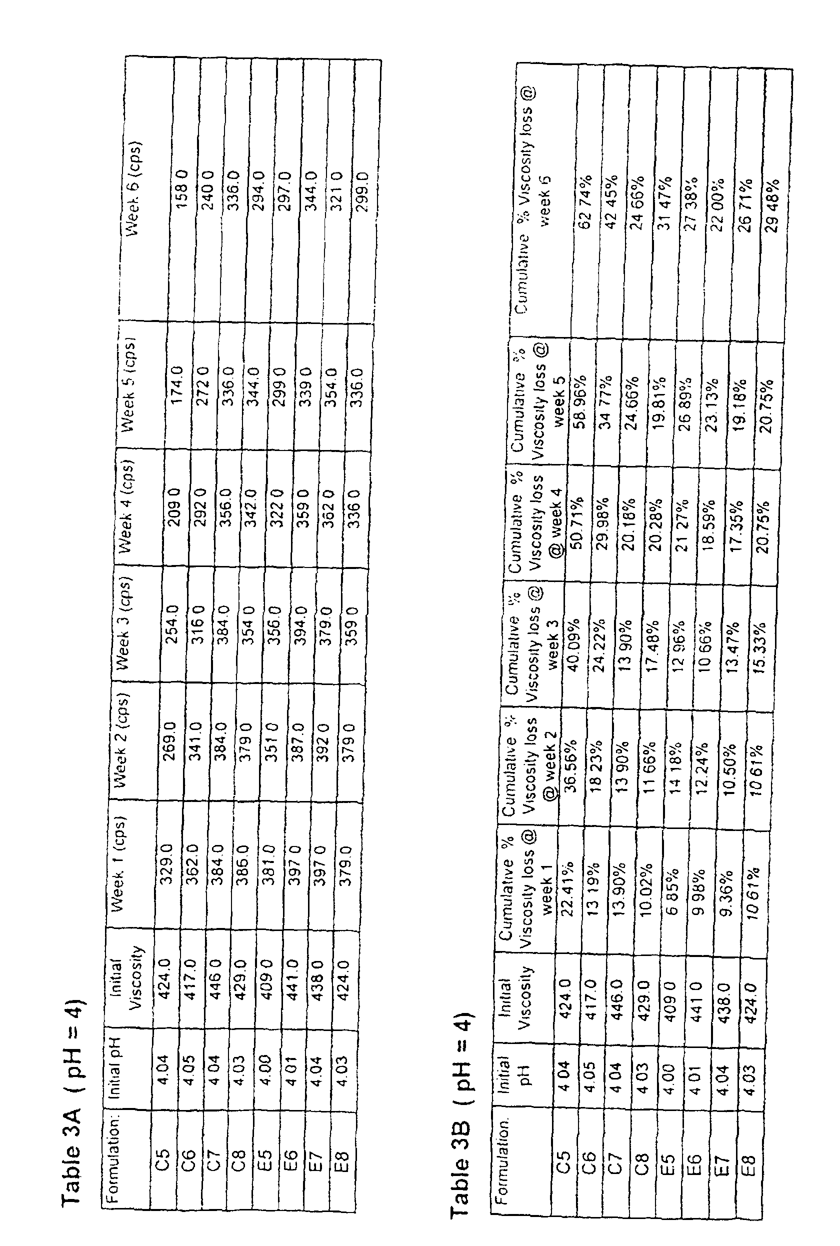

Subsequent to this accelerated ageing test, all of the formulations were observed to each be a coloured, substantially transparent single phase mixture with good flow properties; bulk phase separation was not observed to occur.

### Evaluation of Antimicrobial Efficacy:

A formulation according to the invention was prepared from the following constituents:

| **Example A** | |
|---|---|
| 0.50 % | hydroxyethyl cellulose |
| 0.50 % | linear C₁₂-C₁₆ alcohol ethoxylate, with an average of 7.3 ethylene oxide groups per molecule |
| 1.50 % | quaternary ammonium chloride |
| 1.10 % | formic acid |
| 1.40 % | glycolic acid |
| ∼1.0 % | sodium hydroxide |
| ∼0.4 % | fragrance and dyes |
| to 100% | deionized water |

The weight percentages for Example A indicate the actual weight of the indicated materials, which were supplied from the constituents were the same as used to form the formulations indicated on Table 1, above. This formulation was evaluated in order to evaluate its antimicrobial efficacy against *Staphylococcus aureus* (gram positive type pathogenic bacteria) (ATCC 6538), *Salmonella choleraesuis* (gram negative type pathogenic bacteria) (ATCC 10708), and *Pseudomonas aeruginosa* (ATCC 15442). The testing was performed in accordance with the protocols outlined in "Use-Dilution Method", Protocols 955.14, 955.15 and 964.02 described in Chapter 6 of "Official Methods of Analysis", 16th Edition, of the Association of Official Analytical Chemists; "Germicidal and Detergent Sanitizing Action of Disinfectants", 960.09 described in Chapter 6 of "Official Methods of Analysis", 15th Edition, of the Association of Official Analytical Chemists; or American Society for Testing and Materials (ASTM) E 1054-91. This test is also commonly referred to as the "AOAC Use-Dilution Test Method".

As is appreciated by the skilled practitioner in the art, the results of the AOAC Use-Dilution Test Method indicates the number of test substrates wherein the tested organism remains viable after contact for 10 minutes with a test disinfecting composition / total number of tested substrates (cylinders) evaluated in accordance with the AOAC Use-Dilution Test. Thus, a result of "0/60" indicates that of 60 test substrates bearing the test organism and contacted for 10 minutes in a test disinfecting composition, 0 test substrates had viable (live) test organisms at the conclusion of the test. Such a result is excellent, illustrating the excellent disinfecting efficacy of the tested composition.

Results of the antimicrobial testing of the Example A formulation are indicated on Table 4, below. The reported results indicate the number of test cylinders with live test organisms/number of test cylinders tested for each example formulation and organism tested.

**Table 4 -**

| **Antimicrobial Testing** | | |
|---|---|---|
| *Staphylococcus aureus* | *Salmonella choleraesuis* | *Pseudomonas aeruginosa* |
| 0/60 | 0/60 | 0/60 |

As may be seen from the results indicated above, the compositions according to the invention provide excellent disinfection of hard surfaces.

All weights given throughout the specification are % weights based on the total weight of the composition.

## Claims

1. A thickened aqueous composition for use as an acidic hard surface cleaning and disinfecting composition, comprising:
i) one or more non-ionic surfactants, preferably linear primary alcohol ethoxylates;
ii) one or more quaternary ammonium surfactants having germicidal properties, optionally together with a solvent, such as an alcohol;
iii)an acid mixture comprising formic acid and one or more other water-soluble organic acids (preferably water-soluble organic acids selected from lactic acid, glycolic acid and citric acid), preferably where the formic acid and one or more other water-soluble organic acids are present in a weight ratio of formic acid : water-soluble organic acid of from 1:0.1 to 1:10;
iv)a cellulose or starch based thickener;
v) optionally, but desirably, one or more conventional additives; and
vi) water.

2. A composition according to claim 1, wherein the acid mixture contains formic acid and at least two further different water-soluble organic acids.

3. A composition according to claim 1 or claim 2, wherein the acid mixture contains formic acid, citric acid and glycolic acid.

4. A composition according to any of claims 1 to 3, wherein the formic acid and the one or more water-soluble organic acids are present in a weight ratio of formic acid: further water-soluble organic acid of from 1:0.25 to 1:2.5.

5. A composition according to any one of the preceding claims, wherein the non-ionic surfactant is a linear alcohol ethoxylate.

6. A composition according to any one of the preceding claims comprising:
i) 0.1 - 10% wt. of one or more non-ionic surfactants;
ii) 0.1 - 10% wt. of one or more quaternary ammonium surfactants having germicidal properties; optionally together with 0.001 - 1% wt. of a C₁-C₆ alcohol;
iii) 0.1 - 10% wt.of an acid mixture comprising formic acid and one or more other water-soluble organic acids, particularly water-soluble organic acids selected from lactic acid, glycolic acid and citric acid, wherein the formic acid and the one or more other water-soluble organic acids are present in a weight ratio of formic acid : water-soluble organic acid of from 1:0.1 to 1:10;
iv) 0.01 - 5% wt. of a cellulose or modified cellulose;
v) optionally up to 10% wt. of one or more additives, such as pH adjusting agents, perfumes, fragrances and colouring agents;
vi) with the remaining balance to 100% wt. being water.

7. A process for cleaning limescale from a hard surface comprising the process step of contacting the hard surface having limescale thereon with a cleaning effective amount of the composition according to any of the preceding claims.

8. The use of an acidic mixture in an aqueous cellulose thickened composition, the acidic mixture comprising formic acid and one or more other water-soluble organic acids (preferably water-soluble organic acids selected from lactic acid, glycolic acid and citric acid), preferably where the formic acid and the one or more other water-soluble organic acids are present in a weight ratio of formic acid : water-soluble organic acid of from 1:0.1 to 1:10.

9. The use of an acidic mixture to improve the long term stability of a cellulose thickened cleaning composition wherein the acid mixture comprises formic acid and one or more other water-soluble organic acids (preferably water-soluble organic acids selected from lactic acid, glycolic acid and citric acid), preferably where the formic acid and the one or more other water-soluble organic acids are present in a weight ratio of formic acid: water-soluble organic acid of from 1:0.1 to 1:10.

## Patentansprüche

1. Verdickte, wässrige Zusammensetzung zur Verwendung als saure Reinigungs- und Desinfektionszusammensetzung für harte Oberflächen, umfassend:
(i) einen oder mehrere nichtionische grenzflächenaktive Stoffe, bevorzugt Ethoxylate linearer primärer Alkohole;
(ii) einen oder mehrere grenzflächenaktive Stoffe des quartären Ammonium-Typs mit keimtötenden Eigenschaften, gegebenenfalls zusammen mit einem Lösungsmittel, wie etwa einem Alkohol;
(iii) ein Säuregemisch, umfassend Ameisensäure und eine oder mehrere andere wasserlösliche organische Säuren (bevorzugt wasserlösliche organische Säuren, ausgewählt aus Milchsäure, Glycolsäure und Zitronensäure), wobei die Ameisensäure und eine oder mehrere andere wasserlösliche organische Säuren bevorzugt in einem Gewichtsverhältnis von Ameisensäure : wasserlösliche organische Säure von 1 : 0,1 bis 1 : 10 vorhanden sind;
(iv) ein auf Zellulose oder Stärke basierendes Verdickungsmittel;
(v) gegebenenfalls, aber gewünscht, einen oder mehrere übliche Zusatzstoffe; und
(vi) Wasser.

2. Zusammensetzung gemäß Anspruch 1, wobei das Säuregemisch Ameisensäure und mindestens zwei weitere verschiedene wasserlösliche organische Säuren enthält.

3. Zusammensetzung gemäß Anspruch 1 oder Anspruch 2, wobei das Säuregemisch Ameisensäure, Zitronensäure und Glycolsäure enthält.

4. Zusammensetzung gemäß einem der Ansprüche 1 bis 3, wobei die Ameisensäure und die eine oder mehreren wasserlöslichen organischen Säuren in einem Gewichtsverhältnis von Ameisensäure ; weitere wasserlösliche organische Säure von 1 : 0,25 bis 1 : 2,5 vorhanden sind.

5. Zusammensetzung gemäß einem der vorstehenden Ansprüche, wobei der nichtionische grenzflächenaktive Stoff ein Ethoxylat eines linearen Alkohols ist.

6. Zusammensetzung gemäß einem der vorstehenden Ansprüche, umfassend:
(i) 0,1 - 10 Gew.% eines oder mehrerer nichtionischer grenzflächenaktiver Stoffe;
(ii) 0,1 - 10 Gew.% eines oder mehrerer grenzflächenaktiver Stoffe des quartären Ammonium-Typs mit keimtötenden Eigenschaften; gegebenenfalls zusammen mit 0,001 - 1 Gew.% eines C₁-C₆-Alkohols;
(iii) 0,1 - 10 Gew.% eines Säuregemisches, umfassend Ameisensäure und eine oder mehrere andere wasserlösliche organische Säuren, insbesondere wasserlösliche organische Säuren, ausgewählt aus Milchsäure, Glycolsäure und Zitronensäure, wobei die Ameisensäure und die eine oder mehreren anderen wasserlöslichen organischen Säuren in einem Gewichtsverhältnis von Ameisensäure : wasserlösliche organische Säure von 1 : 0,1 bis 1 : 10 vorhanden sind;
(iv) 0,01 - 5 Gew.% einer Zellulose oder modifiziertes Zellulose;
(v) gegebenenfalls bis zu 10 Gew.% eines oder mehrerer Zusatzstoffe, wie ein Mittel zum Einstellen des pH-Werts, Parfüme, Duftstoffe und Farbmittel;
(vi) wobei der auf 100 Gew.% verbleibende Rest Wasser ist.

7. Verfahren zum Entfernen von Kalkablagerungen von einer harten Oberfläche, umfassend den Verfahrensschritt des in Kontaktbringens der harten Oberfläche, auf der sich Kalkablagerungen befinden, mit einer zur Reinigung wirksamen Menge der Zusammensetzung gemäß einem der vorstehendes Ansprüche.

8. Verwendung eines Säuregemisches in einer mit Zellulose verdickten wässrigen Zusammensetzung, wobei das Säuregemisch Ameisensäure und eine oder mehrere andere wasserlösliche organische Säuren (bevorzugt wasserlösliche organische Säuren, ausgewählt aus Milchsäure, Glycolsäure und Zitronensäure) umfasst, wobei die Ameisensäure und die eine oder mehreren anderen wasserlöslichen organischen Säuren bevorzugt in einem Gewichtsverhältnis von Ameisensäure : wasserlösliche organische Säure von 1 : 0,1 bis 1 : 10 vorhanden sind.

9. Verwendung eines Säuregemisches zur Verbesserung der Langzeitstabilität einer mit Zellulose verdickten Reinigungszusammensetzung, wobei das Säuregemisch Ameisensäure und eine oder mehrere andere wasserlösliche organische Säuren (bevorzugt wasserlösliche organische Säuren, ausgewählt aus Milchsäure, Glycolsäure und Zitronensäure) umfasst, wobei die Ameisensäure und die eine oder mehreren anderes wasserlöslichen organischen Säuren bevorzugt in einem Gewichtsverhältnis von Ameisensäure: wasserlösliche organische Säure von 1 : 0,1 bis 1 : 10 vorhanden sind.

## Revendications

1. Composition aqueuse épaissie à utiliser en tant que composition acide pour le nettoyage et la désinfection de surfaces dures, comprenant :
i) un ou plusieurs agents tensio-actifs non ioniques, de préférence des éthoxylates d'alcools primaires linéaires ;
ii) un ou plusieurs agents tensio-actifs à base d'ammonium quaternaire ayant des propriétés germicides, le cas échéant conjointement avec un solvant comme un alcool ;
iii) un mélange d'acides comprenant de l'acide formique et un ou plusieurs autres acides organiques solubles dans l'eau (de préférence des acides organiques solubles dans l'eau choisis parmi l'acide lactique, l'acide glycolique et l'acide citrique), de préférence l'acide formique et un ou plusieurs autres acides organiques solubles dans l'eau étant présents selon un rapport en poids d'acide formique : acide organique soluble dans l'eau de 1:0,1 à 1:10 ;
iv) un épaississant à base de cellulose ou d'amidon ;
v) le cas échéant, mais de façon désirable, un ou plusieurs additifs usuels ; et
vi) de l'eau.

2. Composition selon la revendication 1, dans laquelle le mélange d'acides contient de l'acide formique et au moins deux autres acides organiques différents solubles dans l'eau.

3. Composition selon la revendication 1 ou la revendication 2, dans laquelle le mélange d'acides contient de l'acide formique, de l'acide citrique et de l'acide glycolique.

4. Composition selon l'une quelconque des revendications 1 à 3, dans laquelle l'acide formique et le ou les acides organiques solubles dans l'eau sont présents selon un rapport en poids d'acide formique : autre acide organique soluble dans l'eau de 1:0,25 à 1:2,5.

5. Composition selon l'une quelconque des revendications précédentes, dans laquelle l'agent tensioactif non ionique est un éthoxylate d'alcool linéaire.

6. Composition selon l'une quelconque des revendications précédentes, comprenant :
i) 0,1 - 10 % en poids d'un ou plusieurs agents tensio-actifs non ioniques ;
ii) 0,1 - 10 % en poids d'un ou plusieurs agents tensio-actifs à base d'ammonium quaternaire ayant des propriétés germicides ; le cas échéant conjointement avec 0,001 - 1 % en poids d'un alcool en C₁-C₆ ;
iii) 0,1 - 10 % en poids d'un mélange d'acides comprenant de l'acide formique et un ou plusieurs autres acides organiques solubles dans l'eau, en particulier des acides organiques solubles dans l'eau choisis parmi l'acide lactique, l'acide glycolique et l'acide citrique, l'acide formique et le ou les autres acides organiques solubles dans l'eau étant présents selon un rapport en poids d'acide formique : acide organique soluble dans l'eau de 1:0,1 à 1:10 ;
iv) 0,01 - 5 % en poids d'une cellulose ou d'une cellulose modifiée ;
v) le cas échéant, jusqu'à 10 % en poids d'un ou plusieurs additifs, comme des agents d'ajustement du pH, des parfums, des fragrances et des agents colorants ;
vi) le reste étant de l'eau jusqu'au complément à 100 % en poids.

7. Procédé de détartrage d'une surface dure, comprenant l'étape opératoire consistant à amener la surface dure ayant du tartre sur elle-même au contact d'une quantité nettoyante efficace de la composition selon l'une quelconque des revendications précédentes.

8. Utilisation d'un mélange acide dans une composition aqueuse épaissie avec de la cellulose, le mélange acide comprenant de l'acide formique et un ou plusieurs autres acides organiques solubles dans l'eau (de préférence des acides organiques solubles dans l'eau choisis parmi l'acide lactique, l'acide glycolique et l'acide citrique), l'acide citrique et le ou les autres acides organiques solubles dans l'eau étant présents, de préférence, selon un rapport en poids d'acide formique : acide organique soluble dans l'eau de 1:0,1 à 1:10.

9. Utilisation d'un mélange acide pour améliorer la stabilité de longue durée d'une composition de nettoyage épaissie avec de la cellulose, le mélange acide comprenant de l'acide formique et un ou plusieurs autres acides organiques solubles dans l'eau (de préférence des acides organiques solubles dans l'eau choisis parmi l'acide lactique, l'acide glycolique et l'acide citrique), l'acide formique et le ou les autres acides organiques solubles dans l'eau étant présents, de préférence, selon un rapport en poids d'acide formique : acide organique soluble dans l'eau de 1:0,1 à 1:10.
